# EUROPEAN PATENT APPLICATION

(11) **EP 3 708 862 A1**
(43) Date of publication of application: **16.09.2020**
(21) Application number: 19162812.2
(22) Date of filing: 14.03.2019
(51) Int. Cl.: F16D 65/00, F16D 55/226

(54) **A DISK BRAKE AND A DUST SHIELD, IN PARTICULAR FOR COMMERCIAL VEHICLES**

(71) Applicant: WABCO Europe BVBA, 1170 Brüssel (BE)
(72) Inventor: Strzala, Wieslaw, 46-220 Byczyna (PL)
(74) Representative: Copi, Joachim

(57) **Abstract**

A disc brake, in particular for commercial vehicles, comprising a brake disk, a brake caliper, a number of brake pads moveably mounted inside the brake caliper, and configured to exert a frictional force upon the brake disc when brought in contact therewith, a fastening element (9) configured to hold down the brake pads when mounted,
a number of retention elements (13a,b) engaging the brake pads and biased against the brake pads such as to push the brake pads radially inwards, and
a dust shielding element (11) configured to limit ingress of dust into the brake caliper (3), the fastening element (9), the number of retention elements (13a,b) and the dust shielding element (11) being integrally formed as one single-part dust shield (7).

## Description

The invention relates to a disc brake, in particular for commercial vehicles, comprising a brake disc, a brake caliper, a number of brake pads movably mounted inside the brake caliper, and configured to exert a frictional force upon the brake disc when brought in contact therewith, a fastening element configured to hold down the brake pads when mounted, a number of retention elements engaging the brake pads and biased against the brake pads such as to push the brake pads radially inwards, and a dust shielding element configured to limit ingress of dust into the brake caliper.

Disc brakes of the aforementioned type are widely known in the industry. In order to function satisfactorily, it is important that the brake pads are able to apply sufficient frictional force to the brake disc when brought in contact therewith. Moisture, such as by water or oil, are detrimental to the friction coefficient between the brake pads and the brake disc and lead to a deterioration of the maximum frictional force. Contrarily, ingress of dust may lead to a short-term increase of friction coefficient between brake pad and brake disc. However, it also greatly reduces the life span of the brake pads and/or the brake discs. Therefore, whenever the vehicle carrying the disc brake is predominantly used in environments where a lot of dust is to be expected, it has been a practice in the art to install a dust shield to the brake caliper. The dust shield traditionally is mounted to a spring hanger which is typically being used as fastening element for holding down the brake pads in their installed position. The retention elements have typically been provided in the form of one or more leaf springs that are interposed between the spring hanger and the brake pads to exert their bias radially inwards onto the brake pads to minimize vibration and improve brake performance. While functioning generally satisfactorily, the installation procedure of known brake discs has been considered to be somewhat complicated Firstly, the spring hanger, leaf springs and dust shield are all separate parts which have to be installed individually. Secondly, the brake pads typically have to comprise specific geometrical features to properly align with the leaf springs.

Therefore, it was an object of the invention to suggest an improved disc brake which overcomes the deficiencies mentioned herein above as far as possible. In particular, it was an object of the invention to provide an improved disc brake which allows for at least one of higher cost efficiency, higher reliability, or improved serviceability.

The invention achieves this object by suggesting a disc brake of the initially mentioned type, wherein the fastening element, the number of retention elements, and the dust shielding element are integrally formed as one single-part dust shield. By being integrally formed as one single-part dust shield, the invention is able to provide a multi-functional dust shield for the disc brake which assumes all functions for which previously a plurality of parts were needed, thus greatly reducing the production costs, installation and service costs due to the reduction of parts involved while facilitating the installation procedure itself. In a preferred embodiment, the brake caliper comprises an Installation opening with an opening geometry configured to provide external access to the brake pads, and the single-part dust shield has a geometry that is correspondingly shaped to the opening geometry and dimensioned such that when mounted, the installation opening is at least substantially closed-off. Preferably, the dust shielding element of the single-part dust shield is shaped such that when mounted, at least 70%, preferably at least 80%, particularly preferred at least 85% of the through-opening is closed-off. This ensures that only little amounts of dust enter the brake caliper, not enough to severely/negatively/impact the lifespan of the brake disc or pads. Dust is to be understood as any particulate matter, such as organic and unorganic particles of various sizes.

In a further preferred embodiment, the installation opening is provided in a radially peripheral surface of the brake caliper, wherein the surface has a convex shape with a defined curvature, and the dust shielding element comprises a number of wings that extend in a circumferential direction of the installation opening. Preferably, the wings respectively have a convex shape of substantially the same curvature as the peripheral surface of the brake caliper. It is to be understood that the term "curvature" may also encompass a sequence of several curvatures including non-curved sections.

In a further preferred embodiment, the retention elements are formed as elastically deformable tongues that when mounted project radially inwards into the installation opening and are biased against the brake pads.

In a further preferred embodiment, the disc brake comprises an inboard brake pad and outboard brake pad, the inboard brake pad having a greater thickness in the axial direction than the outboard brake pad, wherein the retention elements comprise a number of inboard retention elements associated to the inboard brake pad and a number of outboard retention elements associated to the outboard brake pad, and wherein the width of the inboard retention elements in the axial direction is greater than the width of the outboard retention elements in the axial direction. This asymmetrical design ensures that the inboard retention elements hold the inboard brake pad reliably down over its entire life span, in which the thickness of both brake pads reduces in the same extent but outboard brake is moving in axial direction to the rotor to keep the same gap between brake pads and rotor. The inboard brake pad is moving in axial direction towards rotor in relation to calliper.

In a further preferred embodiment, the fastening element of the single-part dust shield comprises a central portion and a plurality of ears that extend away from the central portion and past the installation opening in the axial direction, and each comprise a mounting interface being releasably fastened to the brake caliper. In this, the central portion and the ears assume the function which in prior art system was assumed by the spring hanger.

Preferably, the central portion comprises a stiffening corrugation extending axially across at least a portion of the single-part dust shield. The stiffening corrugation may for example be a closed corrugation, a half-open corrugation, or an open corrugation extending all the way across the single-part dust shield in the axial direction. Preferably, the stiffening corrugation extends radially inwards towards the brake pads into the installation opening, thus contributing to limiting the radial movement of the brake pads in the way a stop shoulder would. The base of the stiffening corrugation preferably is oriented parallel to the corresponding counter-surface of the brake pads.

In a further preferred embodiment, the wings of the dust shielding element extend away from the central portion in the circumferential direction.

With respect to the invention, the circumferential direction is considered to be the circumferential direction of the brake disc, whereas the axial direction is considered to be the direction of the rotational axis of the brake disc, and the radial direction is considered to be the radial direction with respect to the rotational axis of the disc brake.

The retention elements preferably are formed as bends that extend away from the wings or from the central portion. The retention elements can be structures having a single bend which acts as a pivoting joint on the wings of the central portion, respectively, or may comprise several bends, depending on the flexibility that is wanted in the retention elements.

In a further preferred embodiment, the ears are formed as bends that are oppositely formed on the central portion and extend parallel to and radially inwards of the central portion. Preferably, the ears are comprised of multiple bends.

The single-part dust shield is in preferred embodiments partially or completely formed from sheet metal, a polymer or a combination thereof. The retention elements are preferably formed by providing partial cutouts or by being partially stamped out from a base layer of the single-part dust shield, and subsequently being bent in the desired shape. The recesses in the ears are preferably provided in the same manner, i.e. by providing cutouts or stamping out portions of the ears prior to bending them into the desired shape.

The corrugation in the central portion is preferably provided by stamping.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and disclaimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

In brief, the figures to which reference will be made show:
- Fig. 1: shows a schematic three-dimensional view of a disc brake according to a preferred embodiment,
- Fig. 2: shows a schematic three-dimensional view of a single-part dust shield for the disc brake of Fig. 1,
- Fig. 3: shows a schematic detail view of Fig. 1, and
- Fig. 4: shows a schematic partial cross-sectional view of the disc brake of Figs. 1 to 3.

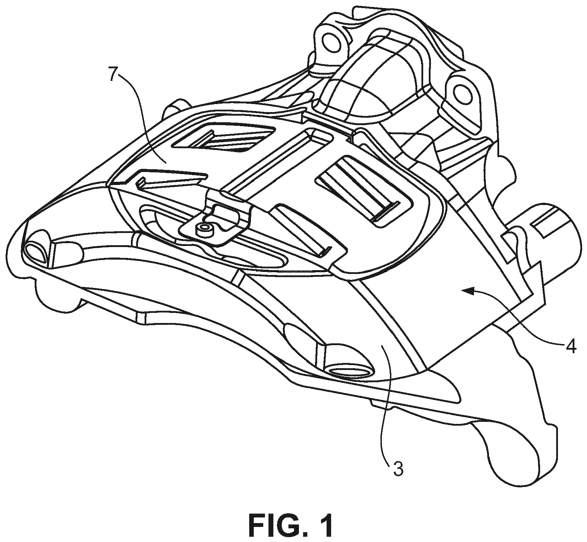

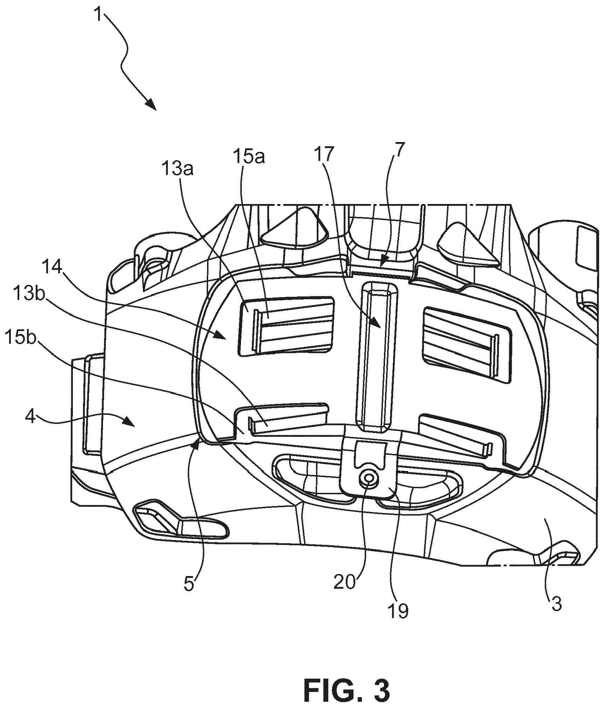

In Fig. 1, there is shown a disc brake 1 (also shown in Fig. 3) for a commercial vehicle. The disk brake 1 is configured to be mounted over a brake disc. For the sake of clarity, the brake disc is omitted from the figures.

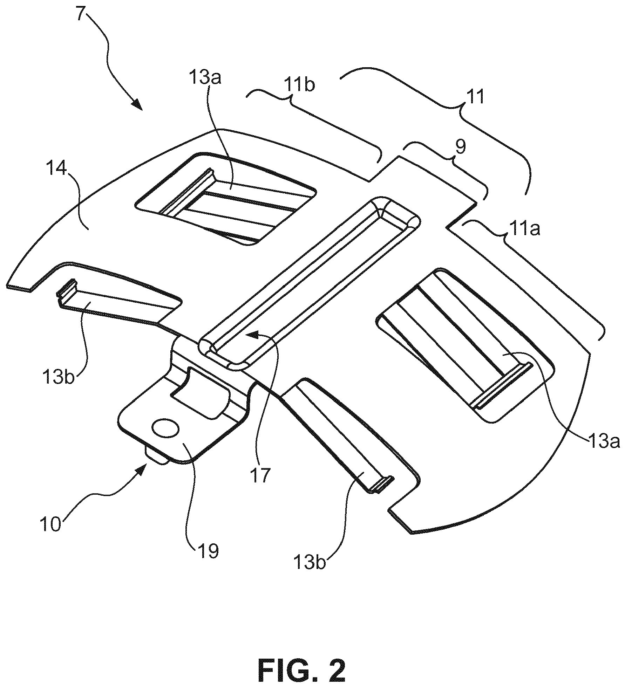

The disc brake 1 further comprises a brake caliper 3 comprising a peripheral surface 4 in which an installation opening 5 (Fig. 3) is provided. The installation opening 5 provides access to the interior of the brake caliper 3, and is the installation opening for inserting and removing a set of brake pads 15a, b (Fig. 3). The installation opening 5 is substantially closed-off by a single-part dust shield 7. The single-part dust shield 7 is shown in more detail in Fig. 2.

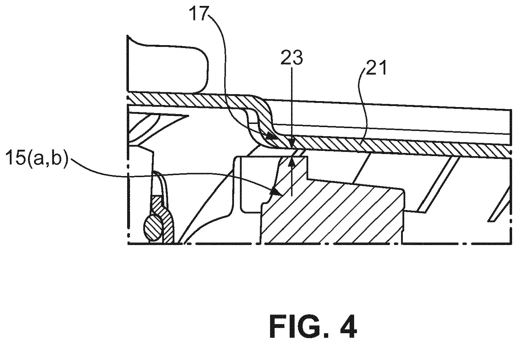

As can be seen from Fig. 2, the dust shield 7 is formed as a single-part dust shield. Integrally formed on the dust shield 7 are a fastening element 9 in a central portion 10 of the single-part dust shield 7, a number of retention elements 13a, b extending radially inwards from the single-part dust shield 7 towards the brake pads (cf. Fig. 1), and a dust shielding element 11 having a pair of wings 11a, b extending in a circumferential direction from the central portion 10 to both sides. Further details regarding the function of the single-part dust shield 7 are discussed with respect to Figs. 3 and 4 hereinafter.

According to Fig. 3, the single-part dust shield 7 almost completely closes off the installation opening 5 in the convex surface 4. The retention elements 13a,b are formed as spring tongues which are elastically deformable and extend radially inwards into the installation opening 5. In the shown embodiment, the retention elements 13a, b are oriented at an inclined angle with respect to the surface of the single-part dust shield 7. However, other shapes and configurations of the retention elements 13a, b are also within the scope of the invention.

The fastening element 9 in the central portion 10 of the single-part dust shield 7 comprises at least one ear 19, preferably two oppositely arranged ears 19, extending past the installation opening 5 in the axial direction. The ear 19 is used to releasably attach the single-part dust shield 7 to the brake caliper 3, for example by way of a screw connection 20.

The fastening element 9 in the central portion further comprises a half-open corrugation 17 extending radially inwards from the single-part dust shield 7 towards the brake pads 15a, b located inside the brake caliper 3 to limit radial movement of the brake pads, as can be seen in the ensuing Fig. 4.

Fig. 4 shows a cross-sectional view through the disc brake 1 (Fig. land Fig.3) in the region above a brake pad 15a, 15b. As can be seen from the figure, the corrugation 17 comprises a base 21 which is oriented parallel to the counter surface of the brake pads 15a, 15b such that there is a substantially constant clearance 23 inbetween the brake pads 15a, b and the corrugation 17.

### List of reference signs

- 1: disc brake
- 3: brake caliper
- 4: peripheral surface, brake caliper
- 5: installation opening
- 7: single-part dust shield
- 9: fastening element
- 10: center portion
- 11: dust shielding element
- 11a,b: wings
- 13a: inbord retention element
- 13b: outboard retention element
- 15a: inboard brake pad
- 15b: outboard brake pad
- 17: corrugation
- 19: ear
- 20: screw
- 21: base, corrugation
- 23: clearance

## Claims

1. A disc brake (1), in particular for commercial vehicles, comprising
a brake disk,
a brake caliper (3),
a number of brake pads (15a,b) moveably mounted inside the brake caliper (3), and configured to exert a frictional force upon the brake disc when brought in contact therewith,
a fastening element (9) configured to hold down the brake pads (15a,b) when mounted,
a number of retention elements (13a,b) engaging the brake pads (15a,b) and biased against the brake pads (15a,b) such as to push the brake pads (15a,b) radially inwards, and
a dust shielding element (11) configured to limit ingress of dust into the brake caliper (3),
**characterized in that** the fastening element (9), the number of retention elements (13a,b) and the dust shielding element (11) are integrally formed as one single-part dust shield (7).

2. The disc brake (1) of claim 1,
wherein the brake caliper (3) comprises an installation opening (5) with an opening geometry configured to provide external access to the brake pads (15a,b), and the single-part dust shield (7) has a geometry that is correspondingly shaped to the opening geometry and dimensioned such that when mounted, the installation opening (5) is at least substantially closed-off.

3. The disc brake (1) of claim 1 or 2,
wherein the dust shielding element (11) of the single-part dust shield (7) is shaped such that when mounted, at least 70%, preferably at least 80%, particularly preferred at least 85% of the through-opening is closed-off.

4. The disc brake (1) of any one of the preceding claims,
wherein the through-opening is provided in a radially peripheral surface (4) of the brake caliper (3) that has a convex shape with a defined curvature, and the dust shielding element (11) comprises a number of wings (11a,b) that extend in a circumferential direction of the installation opening (5).

5. The disc brake (1) of claim 4,
wherein the wings (11a,b) respectively have a convex shape of substantially the same curvature.

6. The disc brake (1) of any one of the preceding claims,
wherein the retention elements (13a,b) are formed as elastically deformable tongues that when mounted project radially inwards into the installation opening (5) and are biased against the brake pads.

7. The disc brake (1) of any one of the preceding claims,
wherein the disc brake (1) comprises an inboard brake pad (15a) and an outboard brake pad (15b), the inboard brake pad (15a) having a greater thickness in the axial direction than the outboard brake pad (15b),
wherein the retention elements (13a,b) comprise a number of inboard retention elements (13a) associated to the inboard brake pad (13a) and a number of outboard retention elements (13b) associated to the outboard brake pad (13b), and wherein the width of the inboard retention elements (13a) in the axial direction is greater than the width of the outboard retention elements (13b) in the axial direction.

8. The disc brake (1) of any one of the preceding claims,
wherein the fastening element (9) of the single-part dust shield (7) comprises a central portion (10) and a plurality of ears (19) extending away from the central portion (10) and extend past the installation opening (5) in the axial direction, and each comprise a mounting interface being releasably fastened to the brake caliper (5).

9. The disc brake (1) of claim 8,
wherein the central portion (10) comprises a stiffening corrugation (17) extending axially across at least a portion of the single-part dust shield (7).

10. The disc brake (1) of claim 8 or 9,
wherein the wings (11a,b) of the dust shielding element (7) extend away from the central portion (10) in the circumferential direction.

11. The disc brake (1) of any one of claims 7 to 10,
wherein the retention elements (13a,b) are formed as bends that extend away from the wings (11a,b) or from the central portion (10).

12. The disc brake (1) of any one of claims 7 to 11,
wherein the ears (19) are formed as bends that are oppositely formed on the central portion (10)and extend parallel to and radially inwards of the central portion (10).

13. The disc brake (1) of any one of the preceding claims,
wherein the single-part dust shield (7) is partially or completely formed from sheet metal, a polymer or a combination thereof.

14. A dust shield (7) for a disc brake (1), in particular a disc brake (1) of a commercial vehicle, the disc brake (1) having a brake disk, a brake caliper (3), and a number of brake pads (15a,b) moveably mounted inside the brake caliper (3), and configured to exert a frictional force upon the brake disc when brought in contact therewith,
the dust shield (7) comprising
- a fastening element (9) configured to hold down the brake pads (15a,b) when mounted,
- a number of retention elements (13a,b) configured to engage the brake pads (15a,b) and to push the brake pads (15a,b) radially inwards, and
- a dust shielding element (11) configured to limit ingress of dust into the brake caliper (3),
**characterized in that** the fastening element (9), the number of retention elements (13a,b) and the dust shielding element (11) are integrally formed as one single-part dust shield.

15. The dust shield (7) of claim 14, wherein the dust shield (7) and/or the disc brake (1) are formed according to any one of claims 2 to 13.
